# EUROPEAN PATENT SPECIFICATION

(11) **EP 1 607 664 B1**
(45) Date of publication and mention of the grant of the patent: **23.01.2008**
(21) Application number: 05009681.7
(22) Date of filing: 03.05.2005
(51) Int. Cl.: F16K 31/52, B67D 1/00

(54) **Valve actuating apparatus**
Ventilsteuerungseinrichtung
Dispositif d'actionnement de soupape

(30) Priority: 16.06.2004 KR 2004044577
(43) Date of publication of application: 21.12.2005
(73) Proprietor: Daewoo Electronics Corporation, Seoul (KR)
(72) Inventor: Kang Suk Choi, Mapo-gu Seoul (KR)
(74) Representative: Jacoby, Georg

(56) References cited:
- EP-A- 0 947 474
- EP-A- 1 005 897
- GB-A- 197 130
- GB-A- 2 182 422
- US-A1- 2003 034 468

## Description

The present invention relates to a valve actuating apparatus for use in a high-pressure gas cylinder of a carbonating apparatus installed in, for example, a refrigerator and a drinking water dispenser; and, more particularly, to a valve actuating apparatus capable of allowing a high-pressure carbon dioxide (CO₂) gas to be safely supplied into a carbonator of a carbonating apparatus from a high-pressure cylinder without imposing a high pressure on the carbonator.

Recently, a carbonating apparatus for supplying carbonated water is used independently or built in a refrigerator, a drinking water dispenser, or the like. Particularly, refrigerators equipped with the carbonating apparatus are now gaining popularity widely.

In general, a carbonating apparatus includes a carbonator made of a hermetic container, for producing carbonated water; a water tank for supplying water to the carbonator; a CO₂ storage cylinder for supplying CO₂ gas to the carbonator; and a dispenser for providing a user with the carbonated water produced in the carbonator.

The pressure of the CO₂ gas contained in the CO₂ storage cylinder is about 60 atm (1 atm = 14.6956 psi = 760 torr). Thus, if this high-pressure gas is directly supplied into the carbonator, it is highly likely that the carbonator is broken or exploded.

Moreover, only when a certain condition is satisfied, for instance, if the internal pressure of the carbonator falls below a predetermined level, a preset amount of CO₂ gas must be supplied into the carbonator from the CO₂ storage cylinder. So a valve of the CO₂ storage cylinder needs to be operated (opened or closed) to allow the preset amount of CO₂ gas to be discharged from the CO₂ storage cylinder.

EP 1 005 897 A2 discloses an apparatus for carbonating beverages contained in bottles, comprising a CO₂ storage connectable to a manual dosing valve, a nozzle tube connected to the dosing valve, and a connection device having a sealing element with a gasket which can be pressed on the mouth of a bottle, wherein the nozzle tube is passed through the sealing element into the interior of the bottle. In order to allow a comfortable and simple handling, the nozzle tube is inserted slidably in the sealing element, and the connection device has a manual pressing device with a lever which, if it is operated, presses the gasket against the bottle mouth and holds it there.

EP 0 947 474 A2 shows an apparatus for dosing CO₂ supplied to water, wherein a predetermined amount of CO₂ is dosed over a variable time period. The CO₂ dosing is controlled by impulses of a water clock which cause a magnet valve to open. The addition of the CO₂ to the water takes place in a vertically mounted container.

US 2003/0034468 A1 provides an on/off valve particularly for high-pressure working fluids that operates between an open and a closed position. For the operation of the valve, a (manually operated) actuator effects a rotation of a cam disk. The cam disk is arranged in a manner that its rotational movement (together with the resilient force of a spring) causes a linear movement of an actuating pin between two positions. The actuating pin is slidably mounted with respect to the valve body and pushes a valve poppet from the open position to the closed position. A spring is used to reset the valve poppet from the closed position to the open position.

Accordingly, required in the carbonating apparatus is a device capable of automatically opening or closing the valve of the CO₂ storage cylinder to thereby allow the predetermined amount of CO₂ gas to be supplied into the carbonator from the CO₂ storage cylinder without imposing a high pressure on the carbonator.

It is, therefore, an object of the present invention to provide a valve actuating apparatus for use in a high-pressure gas cylinder capable of allowing a gas, such as a carbon dioxide (CO₂) gas, contained in the high-pressure gas cylinder to be supplied into a container such as a carbonator of a carbonating apparatus without imposing a high pressure thereon, while opening or closing a valve of the high-pressure gas cylinder at desired time.

The invention provides a valve actuating apparatus for use in a high-pressure gas cylinder including: a casing for being fixedly connected to the high-pressure gas cylinder and housing a valve of the high-pressure gas cylinder; an actuating cam installed inside the casing such that it is linearly movable to press the valve of the high-pressure gas cylinder; a rotating cam rotatably installed inside the casing; and a driving unit connected to the casing, for providing the rotating cam with a rotational force, wherein the rotating cam includes a rotating plate and a protrusion formed on a front surface of the rotating plate; the actuating cam includes an actuating plate and a protrusion formed on a front surface of the actuating plate; and the rotating cam and the actuating cam contact each other.

In accordance with a preferred embodiment of the present invention, there is provided a valve actuating apparatus according to the invention for use in a high-pressure gas cylinder of a carbonating apparatus for producing carbonated water.

In accordance with a another preferred embodiment of the present invention, there is provided a valve actuating apparatus for use in a high-pressure gas cylinder according to the invention, the valve actuating apparatus including a unit for performing a pressing and a pressing release of a valve of the high-pressure gas cylinder repeatedly.

The above and other objects and features of the present invention will become apparent from the following description of preferred embodiments given in conjunction with the accompanying drawings, in which:
Fig. 1 provides a schematic front view of a refrigerator equipped with a carbonating apparatus including a valve actuating apparatus for use in a high-pressure gas cylinder in accordance with a preferred embodiment of the present invention;
Fig. 2 sets forth a schematic plan view of the valve actuating apparatus for use in the high-pressure gas cylinder in accordance with the preferred embodiment of the present invention, wherein an upper connection casing is removed therefrom to illustrate the inside configuration of the valve actuating apparatus;
Fig. 3 illustrates a top view of the cam assembly of the valve actuating apparatus for use in the high-pressure gas cylinder in accordance with the preferred embodiment of the present invention;
Fig. 4 offers a cross sectional view of the pressing member of the actuating cam and the lower casing taken along a line 4-4 of Fig. 2;
Fig. 5 presents a perspective view of the rotating cam of the cam assembly shown in Fig. 3;
Fig. 6 depicts a perspective view of the actuating cam of the cam assembly shown in Fig. 3;
Fig. 7 shows a first modification of the rotating cam shown in Fig. 5;
Fig. 8 illustrates a second modification of the rotating cam shown in Fig. 5;
Fig. 9 is a third modification of the rotating cam shown in Fig. 5; and
Fig. 10 describes a perspective view of the rotating cam of the cam assembly in accordance with the third modified embodiment.

Hereinafter, preferred embodiments of the present invention will be described in detail with reference to the accompanying drawings.

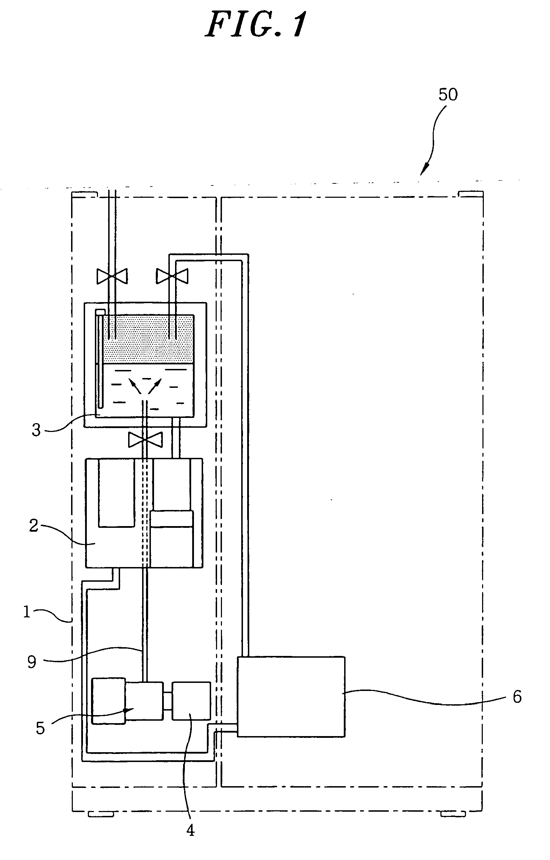

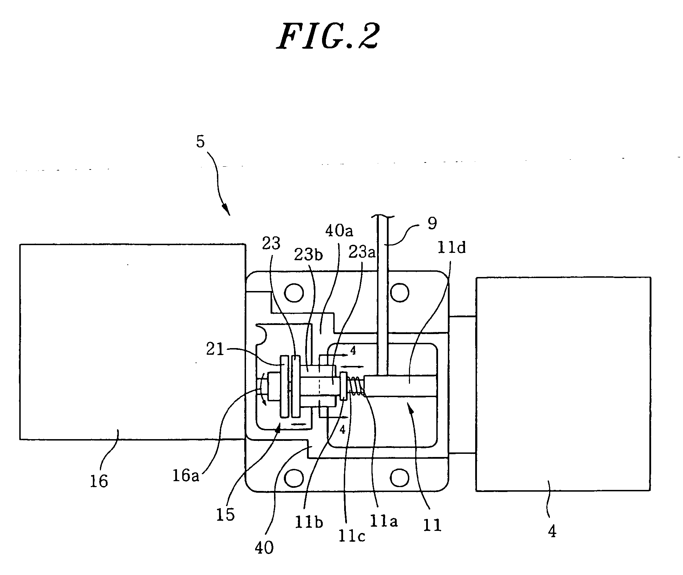

Referring to Fig. 1, there is provided a schematic front view of a refrigerator 50 equipped with a carbonating apparatus including a valve actuating apparatus for use in a high-pressure gas cylinder in accordance with a preferred embodiment of the present invention. The carbonating apparatus includes a carbonator 3 installed in a door 1 of a freezer compartment of the refrigerator 50, for producing carbonated water; a dispenser 2 for supplying the carbonated water produced in the carbonator 3 to a user; a carbon dioxide (CO₂) storage cylinder 4 for supplying a CO₂ gas to the carbonator 3; and a water tank 6 for supplying water to the carbonator 3. Further, disposed at an outlet side of the CO₂ storage cylinder 4 is a valve actuating apparatus 5 for opening or closing a push button valve 11 (see Fig. 2) installed at an outlet of the CO₂ storage cylinder 4 by way of pressing it repeatedly.

Fig. 2 sets forth a schematic plan view of the valve actuating apparatus 5 for use in the high-pressure gas cylinder in accordance with the preferred embodiment of the present invention, wherein an upper connection casing is removed therefrom to illustrate the inside configuration of the valve actuating apparatus 5. The push button valve 11 installed at the outlet of the CO₂ storage cylinder 4 includes a valve body 11d having a valve inlet (not shown) connected to the outlet of the CO₂ storage cylinder 4 and a valve outlet (not shown) for allowing CO₂ gas to be released therethrough; a stem 11c installed in valve body 11d in such a manner that it is connected to a spool (not shown) for allowing or blocking a flow of the gas from the valve inlet to the valve outlet and extended outside the valve body 11d; a button 11b fixed at an end of the stem 11c protruded outside the valve body 11d; and a spring 11a disposed between the button 11b and the valve body 11d, for maintaining the push button valve 11 closed in a normal state. If the button 11b is pressed, the push button valve 11 allows a discharge of the CO₂ gas from the CO₂ storage cylinder 4 through the valve outlet, whereas it blocks the discharge of the CO₂ gas if the pressed state of the button 11b is released. A CO₂ gas supply conduit 9 for conveying the CO₂ gas discharged from the CO₂ storage cylinder 4 into the carbonator 3 is connected to the valve outlet of the valve body 11d.

Although the push button valve 11 is employed in the preferred embodiment of the present invention, any valve can be employed instead as long as it is capable of controlling the discharge of the CO₂ gas from the CO₂ storage cylinder 4 by means of a pressing and pressing-release mechanism.

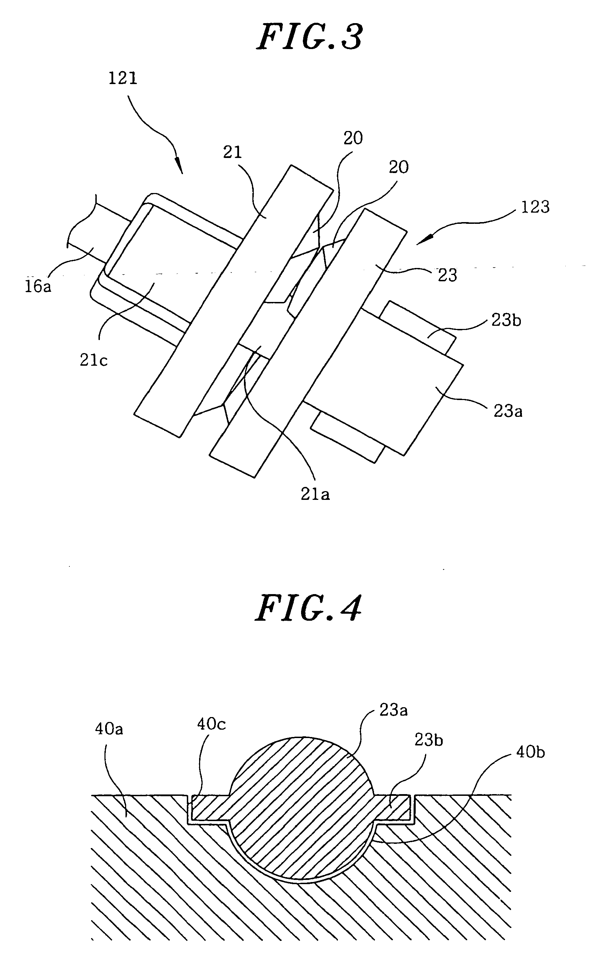

Moreover, as shown in Fig. 2, the valve actuating apparatus 5 in accordance with the preferred embodiment of the present invention includes a connection casing fixedly connected to the outlet side of the CO₂ storage cylinder 4. The connection casing has an upper casing (not shown) and a lower casing 40 that are similar to each other in configuration and combined to each other by, for example, bolts and nuts (Fig. 2 illustrates only the lower casing 40). The inner space of the lower casing 40 are divided into a first and a second space by a partition 40a, and the valve 11 is placed in the first space which is closer to the CO₂ storage cylinder 4. A semicircular groove 40b and a guide groove 40c are formed in a central portion of the partition 40a (see Fig. 4).

Further, fixedly connected to the other end portion of the lower casing 40 opposite to its one end where the CO₂ storage cylinder 4 is installed is a gear motor 16, and an output shaft 16a of the gear motor 16 is protruded into the second space of the lower casing 40. Further, interposed between the tip of the output shaft 16a and the valve 11 is a cam assembly 15 for converting a rotational movement of the output shaft 16a into a linear movement and transferring it to the valve 11.

Referring to Fig. 3, there is provided a top view of the cam assembly 15 of the valve actuating apparatus 5 for use in the high-pressure gas cylinder in accordance with the preferred embodiment of the present invention. The cam assembly 15 includes a rotating cam 121 rigidly connected to the output shaft 16a of the gear motor 16 such that it rotates along with the output shaft 16a; and an actuating cam 123 interposed between the rotating cam 121 and the button 11b of the valve 11 such that it moves linearly in the semicircular groove 40b and the guide groove 40c of the partition 40a. The rotating cam 121 includes a circular rotating plate 21; a pair of protrusions 20 protruded from a front surface of the rotating plate 21; a connection member 21c formed on a rear surface of the rotating plate 21 and fixedly connected to the output shaft 16a of the gear motor 16; and a coupling shaft 21a fixed at a central portion of the rotating plate 21's front surface and inserted rotatably and slidably into a coupling hole 22a (see Fig. 6) of the actuating cam 123.

Further, the actuating cam 123 includes a circular actuating plate 23; a pair of protrusions 20 protruded from a front surface of the actuating plate 23; a pressing member 23a fixed on a rear surface of the actuating plate 23 for pressing the button 11b of the push button valve 11; a pair of sliding members 23b fixed at a side surface of the pressing member 23a in an axial direction to be parallel to each other, each of the sliding members 23b being formed of a thin plate; and the coupling hole 22a for receiving the coupling shaft 21a of the rotating cam 121 inserted therein rotatably and slidably.

Fig. 4 is a cross sectional view of the pressing member 23a of the actuating cam 123 and the lower casing 40 taken along a line 4-4 of Fig. 2. As shown in the figure, a lower portion of the pressing member 23a of the actuating cam 123 is slidably inserted into the groove 40b formed at the lower casing 40's partition 40a, and lower portions of the sliding members 23b are slidably inserted into guide grooves 40c formed at the lower casing 40's partition 40a.

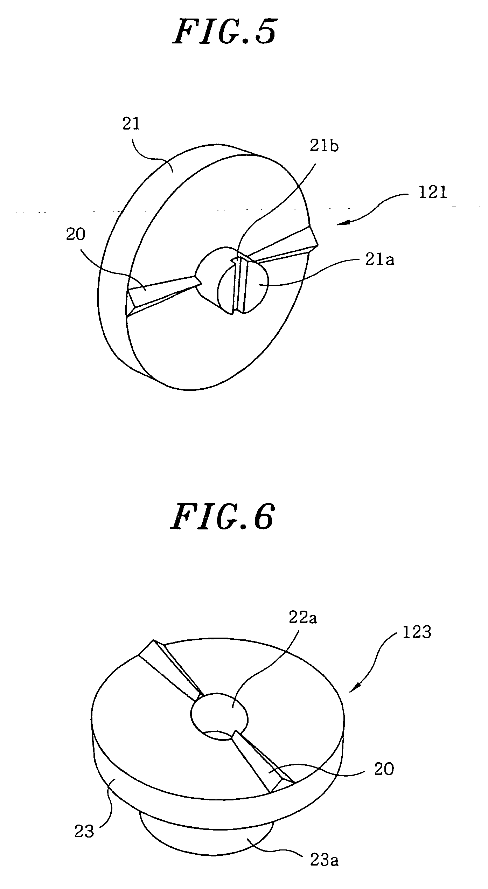

Referring to Fig. 5, there is provided a perspective view of the rotating cam 121 of the cam assembly 15 shown in Fig. 3. The cross section of each of the protrusions 20 formed on the front surface of the rotating plate 21 and disposed thereon at about 180° is of an obtuse (or acute) angled triangular shape which increases in size from the center portion of the rotating plate 21 to the outer periphery thereof. An upper end of the coupling shaft 21a fixed at the central portion on the front surface of the rotating plate 21 is provided with a linear screw groove 21b. The connection member 21c is of a hollow cylindrical shape and has a screw thread formed on the inner surface thereof, whereby it is rigidly coupled to a screw thread formed at one end portion of the gear motor 16's output shaft 16a. At this time, by rotating the rotating plate 21 by way of inserting a fixing tool such as a screwdriver into the screw groove 21b, the coupling of the rotating cam 121 and the output shaft 16a can be carried out readily.

Fig. 6 illustrates a perspective view of the actuating cam 123 of the cam assembly 15 shown in Fig. 3. Each of the protrusions 20 formed on the front surface of the actuating plate 23 and disposed thereon at about 180° is of an obtuse (or acute) angled triangular shape which increases in size from the center portion of the actuating plate 23 to the outer periphery thereof. Further, the coupling hole 22a into which the coupling shaft 21a of the rotating cam 121 is to be rotatably and slidably inserted is provided at the central portion of the front surface of the actuating plate 23.

Hereinafter, operation of the valve actuating apparatus 5 with the above configuration in accordance with the preferred embodiment of the present invention will be described with respect to a case where it is employed in a carbonating apparatus of, for example, a refrigerator. As shown in Fig. 1, the valve actuating apparatus 5 for use in a high-pressure gas cylinder is fixedly coupled to the outlet side of the CO₂ storage cylinder 4 to house the valve 11 of the CO₂ storage cylinder 4.

A device (not shown) for generating a signal demanding a supply of CO₂ gas into the carbonator 3, e.g., a pressure sensor for detecting an internal pressure of the carbonator 3 is installed inside the carbonator 3. If such a signal from the device is transmitted to a controller (not shown) to demand the supply of the CO₂ gas into the carbonator 3, the controller controls the gear motor 16 to rotate the output shaft 16a for a predetermined period of time.

When the output shaft 16a rotates, the rotating cam 121 fixedly coupled to the output shaft 16a is also made to rotate. Then, the _protrusions 20 formed on the front surface of the rotating plate 21 of the rotating cam 121 are made to slide on the front surface of the actuating plate 23 of the actuating camp 123. At this time, if the protrusions 20 on the front surface of the rotating plate 21 contact the protrusions 20 on the front surface of the actuating plate 23 and start to climb the protrusions 20 on the actuating plate 23 along the slopes thereof, the actuating plate 23 and the pressing member 23a of the actuating cam 123 begin to be pushed backward within the grooves 40b and the guide grooves 40c of the partition 40a of the upper and the lower casing 40, and, when crests of the protrusions 20 on the rotating plate 21 come into contact with crests of the protrusions 20 on the actuating plate 23, the actuating cam 123 is pushed backward at its maximum. At this time, the button 11b of the valve 11 is completely pressed by the pressing member 23a of the actuating cam 123, whereby the CO₂ gas is allowed to be discharged out of the CO₂ storage cylinder 4. Then, the discharged CO₂ gas is supplied into the carbonator 3 via the CO₂ gas supply conduit 9.

Further, if the crests of the protrusions 20 on the front surface of the rotating plate 21 pass over the crests of the protrusions 20 on the front surface of the actuating plate 23, the actuating cam 123 begins to be returned to its initial position due to an elastic force of the spring 11a disposed between the button 11b of the valve 11 and the valve body 11b or due to the internal pressure of the CO₂ storage cylinder 4, and, when the protrusions 20 on the front surface of the rotating plate 21 completely pass the protrusions 20 on the front surface of the actuating plate 23 and come into contact with the front surface of the actuating plate 23, the actuating cam 123 arrives in its initial position completely. As a result, the valve 11 is closed, and the discharge of the CO₂ gas from the CO₂ gas storage cylinder 4 is stopped.

Accordingly, while the output shaft 16a of the gear motor 16 makes rotation, the valve 11 is pressed and its pressed state is released repeatedly by the operation of the rotating cam 121 and the actuating cam 123 as described above. As a consequence, the supply of the CO₂ gas into the carbonator 3 is carried out intermittently, which makes it possible to supply the CO₂ gas into the carbonator 3 from the CO₂ storage cylinder 4 containing the high-pressure CO₂ gas therein without imposing a high pressure on the carbonator 3. Additionally, the discharged amount of the CO₂ gas from the CO₂ storage cylinder 4 can be controlled precisely.

Moreover, the number of the valve 11's button 11b being pressed per unit time can be controlled by adjusting the rotational speed of the output shaft 16a of the gear motor 16.

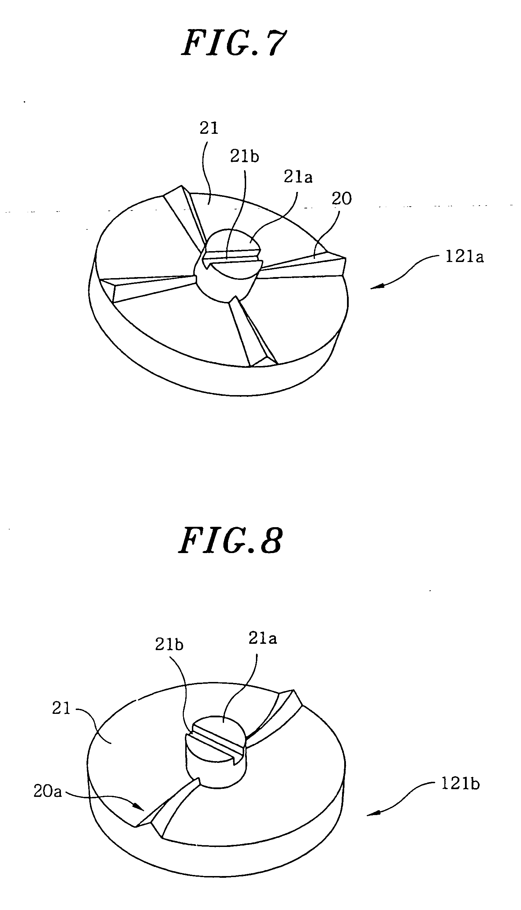

Fig. 7 illustrates a first modification of the rotating cam 121 shown in Fig. 5. As shown in Fig. 7, two pairs of protrusions 20 are formed on the front surface of the rotating plate 21 by an angular interval of 90°. Therefore, in case the output shaft 16a of the gear motor 16 is rotated at the same rotational speed as in the case of using the rotating cam 121 shown in Fig. 5, the number of pressing the button 11b of the valve 11 per unit time increases twice, which makes it possible to increase the amount of the CO₂ gas discharged from the CO₂ storage cylinder 4 per unit time twice without increasing the rotational speed of the output shaft 16a of the gear motor 16.

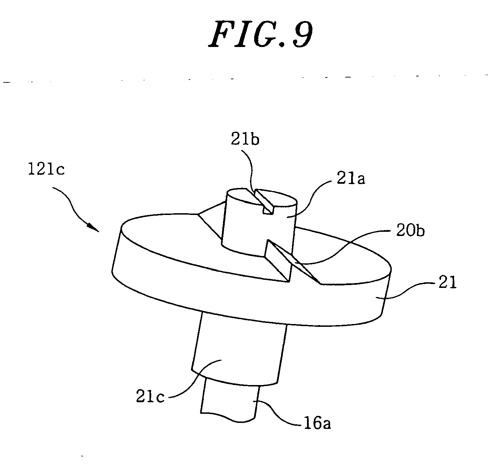

Fig. 8 illustrates a second modification of the rotating cam 121 shown in Fig. 5. As shown in Fig. 8, a pair of protrusions 20a is formed on the front surface of the rotating plate 21 by an angular interval of 180°. The cross section of each protrusion 20a is of an obtuse (or acute) angled triangular shape which increases in size from the center portion of the rotating plate 21 to the outer periphery thereof, as in the preferred embodiment shown in Fig. 5. However, unlike in Fig. 5, the protrusions 20a in this example are not formed linearly from the center portion to the outer periphery of the rotating plate 21 but are curved. Further, in case of using the rotating cam 121b with these curved protrusions 20a, protrusions of an actuating plate 23 are also similarly curved.

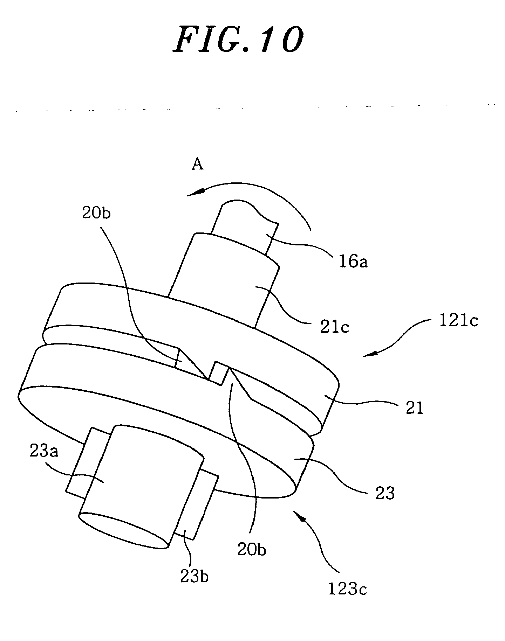

Fig. 9 illustrates a third modification of the rotating cam 121 shown in Fig. 5. As shown in Fig. 9, a pair of protrusions 20b is formed on the front surface of a rotating plate by an angular interval of 180°. The cross section of each protrusions 20b is of a right-angled triangular shape. Therefore, in a case where the protrusions 20b are formed on the front surfaces of the actuating cam 121c and the rotating cam 123c as shown in Fig. 10, although the rotating cam 121 is capable of rotating in a direction indicated by an arrow A, the rotation of the rotating cam 121c in the reverse direction is limited within a preset degree range. Therefore, a reverse rotation of the output shaft 16a which might be made due to a generation of an induced current can be prevented when the gear motor 16 is stopped. Accordingly, the button 11b of the valve 11 can be prevented from being pressed unintentionally, which in turn prevents unintended opening of the valve 11.

Although the preferred embodiment of the present invention has been described for the case of applying the valve actuating apparatus for use in the high-pressure gas cylinder to the carbonating apparatus for use in the refrigerator, it can also be applied in various appliances equipped with carbonators, for example, a drinking water dispenser.

Further, although the preferred embodiment of the present invention has been described for the case of applying the valve actuating apparatus for use in the high-pressure gas cylinder to the CO₂ storage cylinder containing the high-pressure CO₂ gas therein, it can also be applied to various high-pressure gas cylinders containing diverse high-pressure gases other than the CO₂ gas.

In accordance with the preferred embodiment of the present invention described above, since the CO₂ gas can be supplied into the carbonator of the carbonating apparatus from the CO₂ storage cylinder intermittently, the imposing of a high pressure on the carbonator can be prevented. Accordingly, the supply of the CO₂ gas into the carbonator from the CO₂ storage cylinder can be carried out safely. Furthermore, by controlling the rotation number or the rotational speed of the gear motor, a required amount of CO₂ gas can be supplied into the carbonator accurately.

While the invention has been shown and described with respect to the preferred embodiments, it will be understood by those skilled in the art that various changes and modifications may be made without departing from the scope of the invention as defined in the following claims.

## Claims

1. A valve actuating apparatus (5) for use in a high-pressure gas cylinder (4) comprising:
a casing (40) for being fixedly connected to the high-pressure gas cylinder (4) and housing a valve (11) of the high-pressure gas cylinder (4);
an actuating cam (123) installed inside the casing such that it is linearly movable to press the valve (11) of the high-pressure gas cylinder (4);
a rotating cam (121) rotatably installed inside the casing (40) ; and
a driving unit (16) connected to the casing (40), for providing the rotating cam (121) with a rotational force,
**characterised in that** the rotating cam (121) includes a rotating plate (21) and a protrusion (20) formed on a front surface of the rotating plate (21); the actuating cam (123) includes an actuating plate (23) and a protrusion (20) formed on a front surface of the actuating plate (23); and the rotating cam (121) and the actuating cam (123) contact each other.

2. The valve actuating apparatus (5) of claim 1, wherein the casing (40) includes a partition (40a) formed inside thereof and provided with an opening; the actuating cam (123) includes a pressing member (23a) fixed to a rear surface of the actuating plate (23) and a sliding member (23b) fixed on a sidewall of the pressing member (23a); and the pressing member (23a) and the sliding member (23b) are slidably inserted into the opening provided in the partition (40a).

3. The valve actuating apparatus (5) of claim 1, wherein the rotating cam (121) includes a coupling shaft (21a) fixed on a central portion of the front surface of the rotating plate (21); the actuating cam (123) includes a coupling groove (22a) formed at a central portion of the actuating plate (23); and the coupling shaft (21a) is inserted into the coupling groove (22a).

4. The valve actuating apparatus (5) of claim 3, wherein the rotating cam (121) further includes a hollow cylindrical connection member (21c) fixed to a rear surface of the rotating plate (21); a screw thread is formed on an inner surface of the connection member (21c); and a screw groove is formed at an end of the coupling shaft (21a).

5. The valve actuating apparatus (5) of claim 1, wherein the protrusion (20) of the rotating plate (21) is linearly formed from a center portion of the rotating plate (21) to on outer periphery thereof and a cross section of the protrusion (20) is of an obtuse or acute angled triangular shape.

6. The valve actuating apparatus (5) of claim 1, wherein the protrusion (20) of the rotating cam (121) is curvedly formed from a center portion of the actuating plate (21) to an outer periphery thereof and a cross section of the protrusion (20) is of an obtuse or acute angled triangular shape.

7. The valve actuating apparatus (5) of claim 1, wherein the protrusion (20) of the rotating cam (121) is formed from a center portion of the rotating plate (21) to an outer periphery thereof and a cross section of the protrusion (20) is a right-angled triangular shape.

8. A carbonating apparatus for producing carbonated water using the valve actuating apparatus (5) of any one of claims 1 to 7.

## Patentansprüche

1. Ventil-Betätigungseinrichtung (5) für die Verwendung in einem Hochdruck-Gaszylinder (4), umfassend:
ein Gehäuse (40) für eine feste Verbindung mit dem Hochdruck-Gaszylinder (4), das ein Ventil (11) des Hochdruck-Gaszylinders (4) aufnimmt;
ein Betätigungs-Nockenelement (123), das derart im Gehäuse angeordnet ist, dass es zum Ausüben von Druck auf das Ventil (11) des Hochdruck-Gaszylinders (4) linear bewegbar ist;
ein rotierbar im Gehäuse (40) angeordnetes rotierendes Nockenelement (121); und
eine mit dem Gehäuse (40) verbundene Antriebseinheit (16) zum Beaufschlagen des rotierenden Nockenelements mit einer Drehkraft,
**dadurch gekennzeichnet, dass** das rotierende Nockenelement (121) eine rotierende Scheibe (21) und einen an einer Vorderseite der rotierenden Scheibe (21) ausgebildeten Vorsprung (20) umfasst; das Betätigungs-Nockenelement (123) eine Betätigungsscheibe (23) und einen an einer Vorderseite der Betätigungsscheibe (23) ausgebildeten Vorsprung (20) umfasst; und das rotierende Nockenelement (121) und das Betätigungs-Nockenelement (123) einander kontaktieren.

2. Ventil-Betätigungseinrichtung (5) nach Anspruch 1, bei der das Gehäuse (40) eine in seinem Inneren ausgebildete und mit einer Öffnung versehene Abtrennung (40a) vorsieht; das Betätigungs-Nockenelement (123) ein an einer Rückseite der Betätigungsscheibe (23) befestigtes Drückelement (23a) und ein an einer Seitenwand des Drückelements (23a) befestigtes Gleitelement (23b) umfasst; und das Drückelement (23a) und das Gleitelement (23b) gleitend in die in der Abtrennung (40a) vorgesehene Öffnung geführt sind.

3. Ventil-Betätigungseinrichtung (5) nach Anspruch 1, bei welcher das rotierende Nockenelement eine an einem mittigen Abschnitt der Vorderseite der rotierenden Scheibe befestigte Koppelstange (21a) umfasst; das Betätigungs-Nockenelement (123) eine an einem mittigen Abschnitt der Betätigungsscheibe (23) ausgebildete Koppelvertiefung (22a) umfasst; und die Koppelstange (21a) in die Koppelvertiefung (22a) eingeführt ist.

4. Ventil-Betätigungseinrichtung (5) nach Anspruch 3, bei welcher das rotierende Nockenelement (121) außerdem ein an einer Rückseite der rotierenden Scheibe (21) befestigtes, hohles, zylindrisches Verbindungselement (21c) umfasst; ein Schraubgewinde an der Innenseite des Verbindungselements (21c) ausgebildet ist; und ein Schraubschlitz an einem Ende der Koppelstange (21a) ausgebildet ist.

5. Ventil-Betätigungseinrichtung (5) nach Anspruch 1, bei welcher der Vorsprung (20) der rotierenden Scheibe (21) von einem mittigen Abschnitt zu einem äußeren Randbereich der rotierenden Scheibe (21) linear ausgebildet ist und ein Querschnitt des Vorsprungs (20) eine stumpf- oder spitzwinklige Dreiecksform aufweist.

6. Ventil-Betätigungseinrichtung (5) nach Anspruch 1, bei welcher der Vorsprung (20) der rotierenden Scheibe (21) von einem mittigen Abschnitt zu einem äußeren Randbereich der Betätigungsscheibe (21) gekrümmt ausgebildet ist und ein Querschnitt des Vorsprungs (20) eine stumpf- oder spitzwinklige Dreiecksform aufweist.

7. Ventil-Betätigungseinrichtung (5) nach Anspruch 1, bei welcher der Vorsprung (20) der rotierenden Scheibe (121) von einem mittigen Abschnitt zu einem äußeren Randbereich der rotierenden Scheibe (21) ausgebildet ist und ein Querschnitt des Vorsprungs (20) eine rechtwinklige Dreiecksform aufweist.

8. Karbonisierungsapparat zum Erzeugen von karbonisiertem Wasser unter Verwendung der Ventil-Betätigungseinrichtung nach einem der Ansprüche 1 bis 7.

## Revendications

1. Appareil d'actionnement de soupape (5) destiné à être utilisé dans un cylindre de gaz à haute pression (4) comprenant :
■ un carter (40) destiné à être relié de manière fixe au cylindre de gaz à haute pression (4) et contenant une soupape (11) du cylindre de gaz à haute pression (4) ;
■ une came d'actionnement (123) installée à l'intérieur du carter de telle sorte qu'elle soit linéairement mobile afin d'appuyer sur la soupape (11) du cylindre de gaz à haute pression (4) ;
■ une came rotative (121) installée de manière rotative à l'intérieur du carter (40) ; et
■ une unité d'entraînement (16) reliée au carter (40), afin de fournir à la came rotative (121) une force de rotation,
**caractérisé en ce que** la came rotative (121) comprend une plaque rotative (21) et une saillie (20) formée sur une surface avant de la plaque rotative (21) ; la came d'actionnement (123) comprend une plaque d'actionnement (23) et une saillie (20) formée sur une surface avant de la plaque d'actionnement (23) ; et la came rotative (121) et la came d'actionnement (123) se touchent.

2. Appareil d'actionnement de soupape (5) selon la revendication 1, dans lequel le carter (40) comprend une partition (40a) formée à l'intérieur de celui-ci et munie d'une ouverture ; la came d'actionnement (123) comprend un élément de pression (23a) fixé sur une surface arrière de la plaque d'actionnement (23) et un élément coulissant (23b) fixé sur une paroi latérale de l'élément de pression (23a) ; et l'élément de pression (23a) et l'élément coulissant (23b) sont insérés de manière coulissante dans l'ouverture prévue dans la partition (40a).

3. Appareil d'actionnement de soupape (5) selon la revendication 1, dans lequel la came rotative (121) comprend un arbre d'accouplement (21a) fixé sur une partie centrale de la surface avant de la plaque rotative (21) ; la came d'actionnement (123) comprend une rainure d'accouplement (22a) formée au niveau d'une partie centrale de la plaque d'actionnement (23) ; et l'arbre d'accouplement (21a) est inséré dans la rainure d'accouplement (22a).

4. Appareil d'actionnement de soupape (5) selon la revendication 3, dans lequel la came rotative (121) comprend en outre un élément de raccordement cylindrique creux (21c) fixé sur une surface arrière de la plaque rotative (21) ; un filetage de vis est formé sur une surface interne de l'élément de raccordement (21c) ; et une rainure de vis est formée au niveau d'une extrémité de l'arbre d'accouplement (21a).

5. Appareil d'actionnement de soupape (5) selon la revendication 1, dans lequel la saillie (20) de la plaque rotative (21) est linéairement formée entre une partie centrale de la plaque rotative (21) et une périphérie externe de celle-ci, et une section transversale de la saillie (20) possède une forme triangulaire à angle obtus ou aigu.

6. Appareil d'actionnement de soupape (5) selon la revendication 1, dans lequel la saillie (20) de la came rotative (121) est formée de manière incurvée entre une partie centrale de la plaque d'actionnement (21) et une périphérie externe de celle-ci, et une section transversale de la saillie (20) possède une forme triangulaire à angle obtus ou aigu.

7. Appareil d'actionnement de soupape (5) selon la revendication 1, dans lequel la saillie (20) de la came rotative (121) est formée entre une partie centrale de la plaque rotative (21) et une périphérie externe de celle-ci, et une section transversale de la saillie (20) possède une forme triangulaire à angle droit.

8. Appareil de saturation destiné à produire de l'eau gazeuse en utilisant l'appareil d'actionnement de soupape (5) selon l'une quelconque des revendications 1 à 7.
